# EUROPEAN PATENT APPLICATION

(11) **EP 4 375 479 A1**
(43) Date of publication of application: **29.05.2024**
(21) Application number: 23211075.9
(22) Date of filing: 21.11.2023
(51) Int. Cl.: E21C 35/18, F16B 43/00

(54) **GASKET**

(30) Priority: 22.11.2022 TW 111212793 U; 24.07.2023 TW 112207728 U
(71) Applicant: Everpads Co., Ltd., Taichung (TW)
(72) Inventor: CHIANG, Chun-Li, 40768 Taichung (TW)
(74) Representative: Nederlandsch Octrooibureau

(57) **Abstract**

A gasket (100) includes a body (110), a through hole (120), a covering portion (130), at least one groove (141, 142), a protruding ring (150) and an extending portion (160). The body includes a cutter surface (111) facing towards the cutter and a holder surface (112) opposite to the cutter surface. The through hole penetrates the body, and the through hole has an axial direction (X1). The covering portion surrounds the body and protrudes outwards from the holder surface along the axial direction, and the covering portion has a covering thickness (h1) relative to the holder surface. The at least one groove is disposed at the holder surface and located between the covering portion and the through hole. The protruding ring protrudes from the holder surface and located between the covering portion and the at least one groove. The extending portion is located at the holder surface, protrudes from the holder surface, and surrounds the through hole.

## Description

### BACKGROUND

### Technical Field

The present disclosure relates to a gasket and a cutting tool structure. More particularly, the present disclosure relates to a gasket and a cutting tool structure applied to a milling machine for milling a road.

### Description of Related Art

In response to the need of mass repairing on roads, the practitioners of road milling field developed a cutting tool structure, and a gasket is disposed between a cutter and a chisel holder to buffer the collision between the cutter and the chisel holder during the milling process, thereby reducing the loss rate of the cutter. However, due to the high impact during the milling process, the conventional gasket often fails to be installed stably on the chisel holder such that the gasket cannot abut against the cutter stably, thereby limiting the buffering effect.

Accordingly, a gasket which can effectively prevent abrasion of the chisel holder is still a goal which the practitioners pursue.

### SUMMARY

According to an embodiment of the present disclosure, a gasket is disposed at a chisel holder and configured for a cutter to rest thereon, and the gasket includes a body, a through hole, a covering portion, at least one groove, a protruding ring and an extending portion. The body includes a cutter surface facing towards the cutter and a holder surface opposite to the cutter surface. The through hole penetrates the body and is configured for a handle of the cutter to insert therein, and the through hole has an axial direction. The covering portion surrounds the body and protrudes outwards from the holder surface along the axial direction, and the covering portion has a covering thickness relative to the holder surface. The at least one groove is disposed at the holder surface and located between the covering portion and the through hole. The protruding ring protrudes from the holder surface and is located between the covering portion and the at least one groove. The extending portion is located at the holder surface, protrudes from the holder surface, and surrounds the through hole. A radial thickness of the extending portion increases gradually towards the at least one groove along the axial direction.

According to the gasket of the foregoing aspect, the at least one groove may have a depth relative to the holder surface along the axial direction, and the depth is greater than or equal to 0.2 mm and less than 0.3 mm.

According to the gasket of the foregoing aspect, the extending portion may have a maximum extending height relative to the at least one groove along the axial direction, and a ratio of an inner diameter of the through hole to the maximum extending height is greater than 8.

According to the gasket of the foregoing aspect, a number of the at least one groove may be two, one of the two grooves is located between the other one of the two grooves and the through hole, a ring protrusion is formed between the two grooves, and the depth of the one of the two grooves is less than or equal to the depth of the other one of the two grooves along the axial direction relative to the holder surface. According to the gasket of the foregoing aspect, a spacing distance between the protruding ring and the covering portion may be greater than or equal to 2 mm and less than 3 mm.

According to the gasket of the foregoing aspect, the protruding ring may have a protruding height relative to the holder surface along the axial direction, and the protruding height is greater than or equal to 0.5 mm and less than 0.8 mm. According to the gasket of the foregoing aspect, the protruding ring may have a top surface, and the top surface is perpendicular to the axial direction.

According to the gasket of the foregoing aspect, the body may further include a plurality of radial convex portions and a plurality of radial protruding portions, and each of the radial convex portions and each of the radial protruding portions are arranged alternatively to each other.

According to the gasket of the foregoing aspect, the body may further include a plurality of notches, and the notches are located at the cutter surface and arranged around the axial direction at intervals.

### BRIEF DESCRIPTION OF THE DRAWINGS

The present disclosure can be more fully understood by reading the following detailed description of the embodiment, with reference made to the accompanying drawings as follows:
Fig. 1 shows one three-dimensional view of a gasket according to a first embodiment of the present disclosure.
Fig. 2 shows a cross-sectional view of the gasket according to the first embodiment in Fig. 1.
Fig. 3 shows another three-dimensional view of the gasket according to the first embodiment in Fig. 1.
Fig. 4 shows a three-dimensional view of a gasket according to a second embodiment of the present disclosure.
Fig. 5 shows a cross-sectional view of the gasket according to the second embodiment in Fig. 4.
Fig. 6 shows a cross-sectional view of a gasket according to a third embodiment of the present disclosure.
Fig. 7 shows a three-dimensional view of a gasket according to a fourth embodiment of the present disclosure.
Fig. 8 shows a three-dimensional view of a gasket according to a fifth embodiment of the present disclosure.
Fig. 9 shows a three-dimensional view of a gasket according to a sixth embodiment of the present disclosure.
Fig. 10 shows a schematic view of a cutting tool structure according to a seventh embodiment of the present disclosure.

### DETAILED DESCRIPTION

The embodiments will be described with the drawings. For clarity, some practical details will be described below. However, it should be noted that the present disclosure should not be limited by the practical details, that is, in some embodiment, the practical details is unnecessary. In addition, for simplifying the drawings, some conventional structures and elements will be simply illustrated, and repeated elements may be represented by the same labels.

It will be understood that when an element (or device) is referred to as be "connected to" another element, it can be directly connected to the other element, or it can be indirectly connected to the other element, that is, intervening elements may be present. In contrast, when an element is referred to as be "directly connected to" another element, there are no intervening elements present. In addition, the terms first, second, third, etc. are used herein to describe various elements or components, these elements or components should not be limited by these terms. Consequently, a first element or component discussed below could be termed a second element or component. Besides, a combination of these elements (units or circuits) of the present closure is not a common combination in this art, so it cannot be predicted whether a relation of the combination hereof can be easily done by a person having skill in the art by these elements (units or circuits).

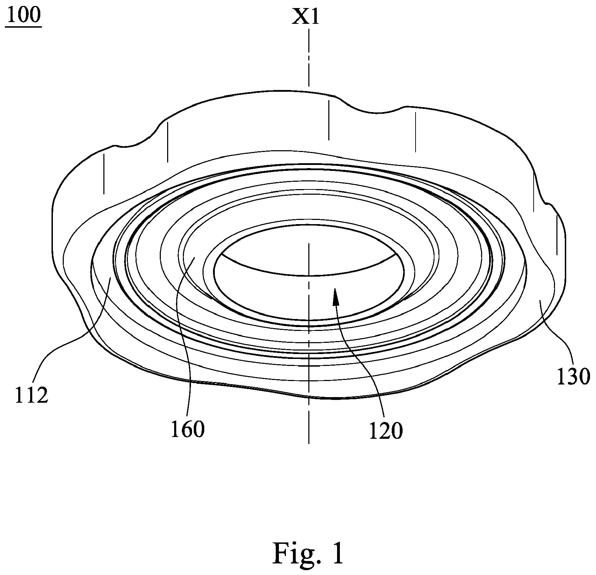

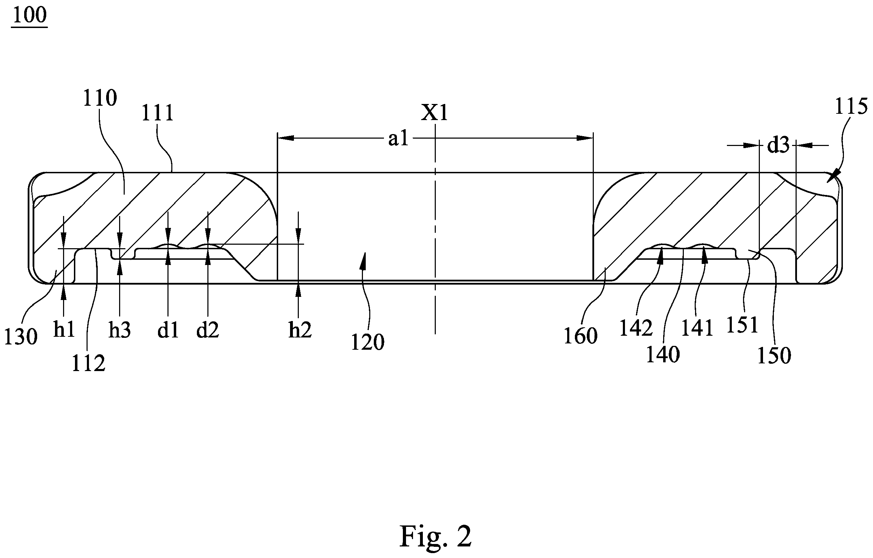

Fig. 1 shows one three-dimensional view of a gasket 100 according to a first embodiment of the present disclosure. Fig. 2 shows a cross-sectional view of the gasket 100 according to the first embodiment in Fig. 1. As shown in Figs. 1 and 2, a gasket 100 is disposed at a chisel holder and configured for a cutter to rest thereon. The gasket 100 includes a body 110, a through hole 120, a covering portion 130, at least one groove 141, 142, a protruding ring 150 and an extending portion 160. The body 110 includes a cutter surface 111 and a holder surface 112. The cutter surface 111 faces towards the cutter, and the holder surface 112 is opposite to the cutter surface 111. The through hole 120 penetrates the body 110 and is configured for a handle of the cutter to insert therein, and the through hole 120 has an axial direction X1. The covering portion 130 surrounds the body 110 and protruding outwards from the holder surface 112 along the axial direction X1, and the covering portion 130 has a covering thickness h1 relative to the holder surface 112. A number of the grooves 141, 142 is two, the grooves 141, 142 are disposed at the holder surface 112 and located between the covering portion 130 and the through hole 120, the groove 142 is located between the groove 141 and the through hole 120, and a ring protrusion 140 is formed between the two grooves 141, 142. The protruding ring 150 protrudes from the holder surface 112 and is located between the covering portion 130 and the groove 142. The extending portion 160 is located at the holder surface 112, protrudes from the holder surface 112, and surrounds the through hole 120. A radial thickness of the extending portion 160 increases gradually towards the groove 141 along the axial direction X1.

When the gasket 100 is assembled with the chisel holder, the covering portion 130 can cover an opening of the chisel holder, the protruding ring 150 can abut against the chisel holder, the extending portion 160 inserts into the opening. With the ring protrusion 140 formed between the two grooves 141, 142, a contacting area between the holder surface 112 and the chisel holder is increased to stably position the gasket 100 at the chisel holder, thereby preventing abrasion of the chisel holder caused by wearing between the gasket 100 and the chisel holder during milling process. Therefore, abrasion of the chisel holder can be prevented, and a service life of the cutter and the chisel holder can be increased. The details of the gasket 100 are described in the following.

As shown in Fig. 2, each of the grooves 141, 142 has a depth d1, d2 relative to the holder surface 112 along the axial direction X1. Each of the depth d1, d2 is greater than or equal to 0.2 mm and less than 0.3 mm. In the first embodiment, the depth d1 of the groove 141 is equal to the depth d2 of the groove 142, and both of the depths d1, d2 are 0.2 mm. Therefore, it can avoid that the depths d1, d2 become overlarge to prevent causing an overlarge gap between the gasket 100 and the chisel holder. The extending portion 160 has a maximum extending height h2 relative to the groove 141 along the axial direction X1, a ratio a1/h2 of an inner diameter a1 of the through hole 120 to the maximum extending height h2 is greater than 8.

A spacing distance d3 between the protruding ring 150 and the covering portion 130 is greater than or equal to 2 mm and less than 3 mm. By the spacing between the protruding ring 150 and the covering portion 130, the contacting area between the holder surface 112 and the chisel holder can be further increased to improve the stability of installing the gasket 100 on the chisel holder.

Moreover, the protruding ring 150 has a protruding height h3 relative to the holder surface 112 along the axial direction X1, and the protruding height h3 is greater than or equal to 0.5 mm and less than 0.8 mm. Therefore, the contacting area between the protruding ring 150 and the chisel holder can be increased, and the possibility of breaking down the protruding ring 150 during the milling process due to the overlarge protruding height h3 can be prevented.

As shown in Fig. 2, the protruding ring 150 may have a top surface 151, and the top surface 151 is perpendicular to the axial direction X1. Specifically, the protruding ring 150 may be a ring platform protruding from the holder surface 112 and a surface thereof is perpendicular to the axial direction X1 in order to reduce the difficulty of manufacturing.

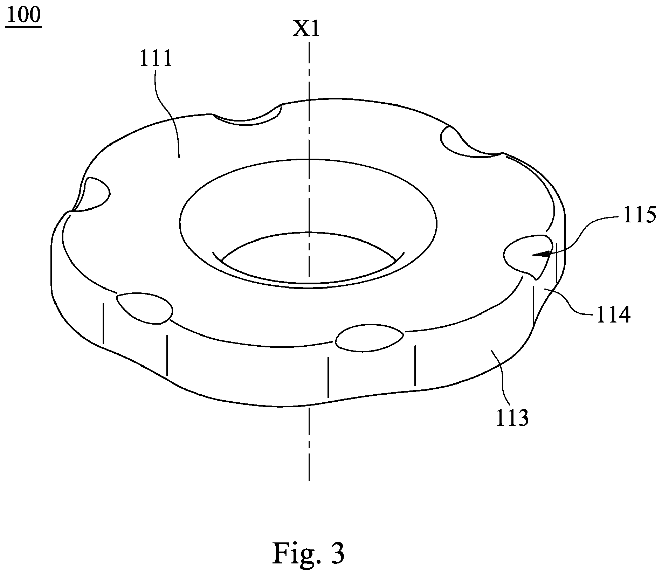

Fig. 3 shows another three-dimensional view of the gasket 100 according to the first embodiment in Fig. 1. As shown in Figs. 1 and 3, the body 110 may include a plurality of radial convex portions 114 and a plurality of radial protruding portions 113, and each of the radial convex portions 114 and each of the radial protruding portions 113 are arranged alternatively to each other. The body 110 may further include a plurality of notches 115. The notches 115 are located at the cutter surface 111 and arranged around the axial direction X1 at intervals. The radial convex portions 114 and the radial protruding portions 113 form a wave-like structure at an outer edge of the body 110 such that the whole gasket 100 presents a plum-like shape. Specifically, each of the notches 115 is disposed at each of the radial convex portions 114 and surrounds an outer edge of the cutter surface 111 at intervals. Furthermore, the covering portion 130 may also present the plum-like shape and surround the holder surface 112.

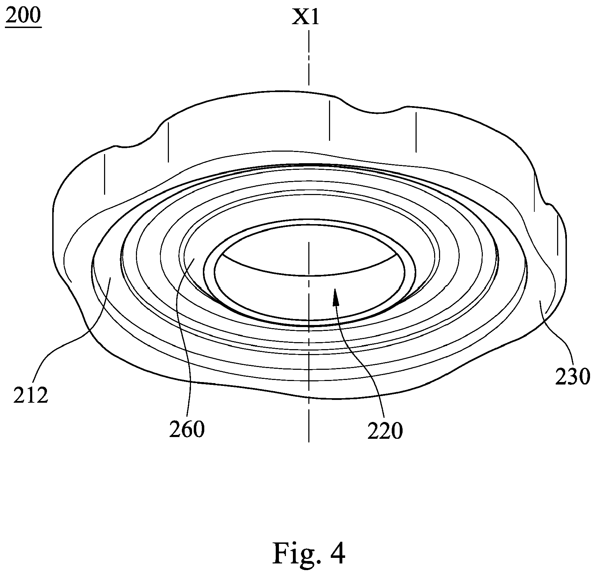

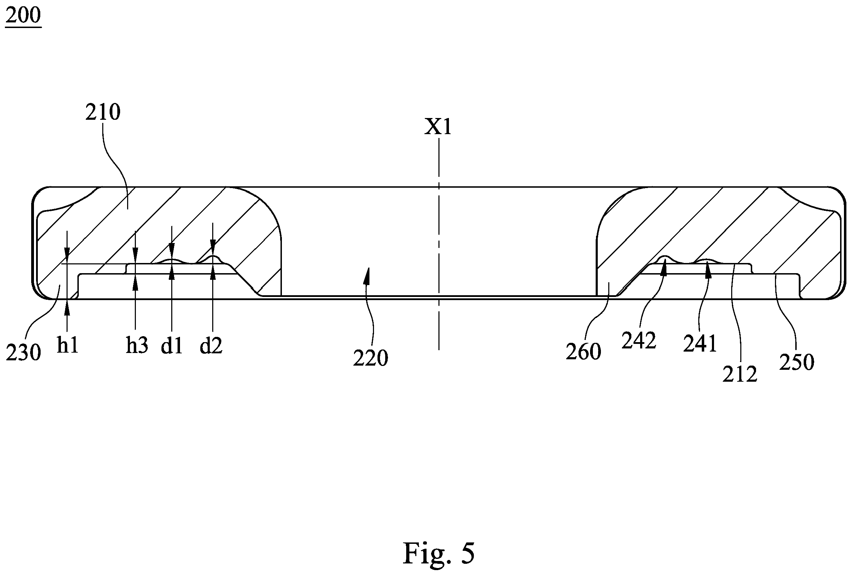

Fig. 4 shows a three-dimensional view of a gasket 200 according to a second embodiment of the present disclosure. Fig. 5 shows a cross-sectional view of the gasket 200 according to the second embodiment in Fig. 4. In the second embodiment, structures and configuration of a body 210, a through hole 220, a covering portion 230, two grooves 241, 242, a protruding ring 250 and an extending portion 260 of the gasket 200 are similar with the structures and configuration of the body 110, the through hole 120, the covering portion 130, the two grooves 141, 142, the protruding ring 150 and the extending portion 160 of the gasket 100 of the first embodiment, and will not be described herein. It is worthy to be mentioned that, in the second embodiment, a depth d1 of the groove 241 is smaller than a depth d2 of the groove 242 such that the holder surface 212 form an undulating surface with uneven heights to improve the friction between the holder surface 212 and the chisel holder, thereby improving the stability of installing the gasket 200 on the chisel holder. And, by the grooves 241, 242 with different depth d1, d2, the impact during the milling process can be dispersed to reduce abrasion of the chisel holder during the milling process.

Moreover, the protruding ring 250 is connected to the covering portion 230 integrally, and the protruding height h3 of the protruding ring 250 relative to the holder surface 212 along an axial direction X1 is smaller than the covering thickness h1 of the covering portion 230 relative to the holder surface 212. By the design of integral connection, the holder surface 212 may form a surface with steps such that the covering portion 230 and the protruding ring 250 can engage with the opening stably to improve the stability of installing the gasket 200 on the chisel holder.

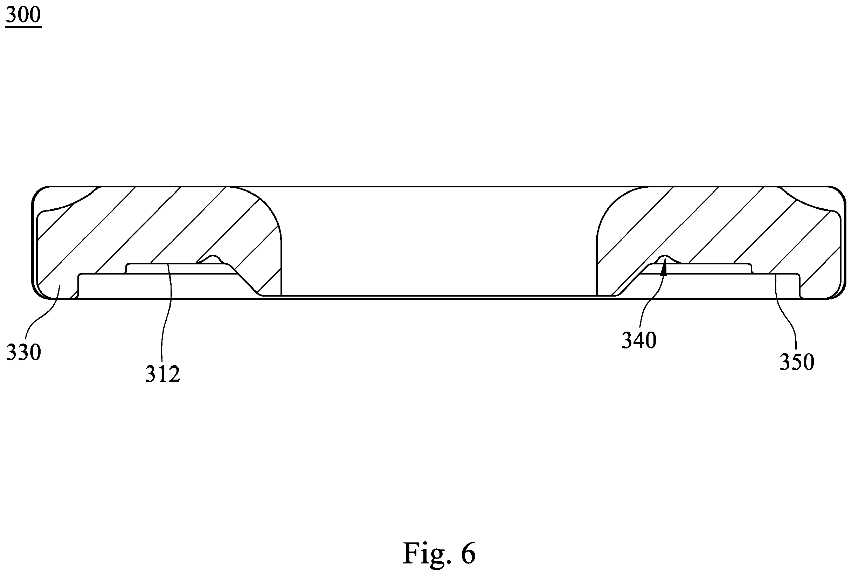

Fig. 6 shows a cross-sectional view of a gasket 300 according to a third embodiment of the present disclosure. In the third embodiment, structures and configuration of the gasket 300 are similar with the structures and configuration of the gasket 200 of the second embodiment, and will not be described herein. It is worthy to be mentioned that, in the third embodiment, a number of at least one groove 340 is single, and a gap is formed between a holder surface 312 and the chisel holder, when a covering portion 330 and a protruding ring 350 contact the chisel holder to install the gasket 300 thereon. Therefore, manufacturing of the gasket 300 can be simplified.

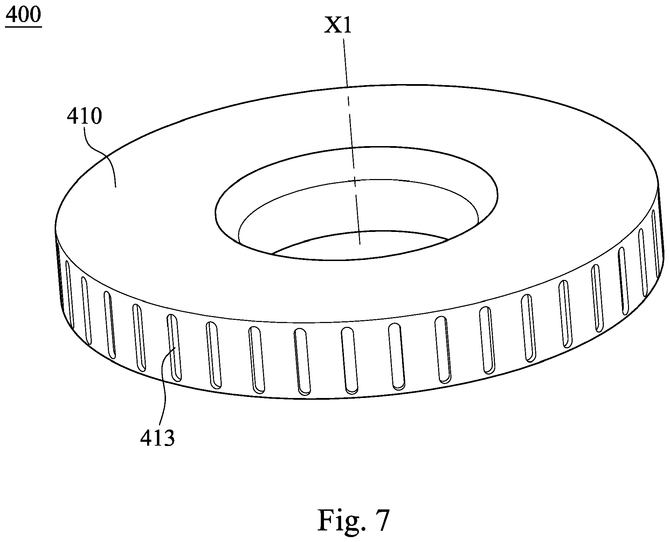

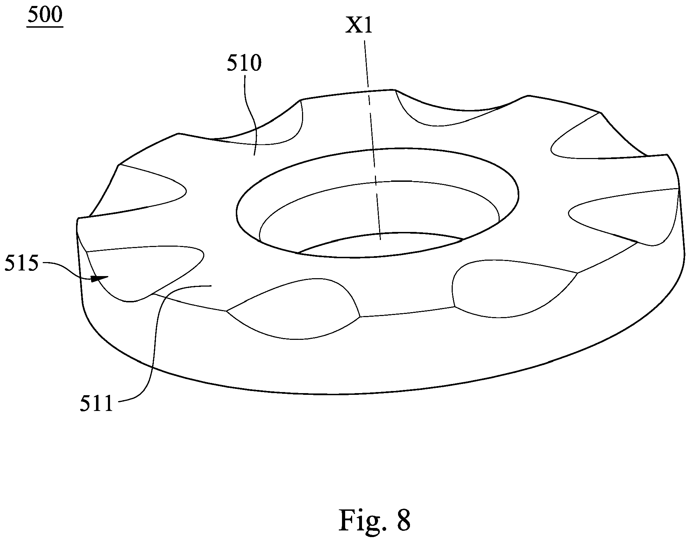

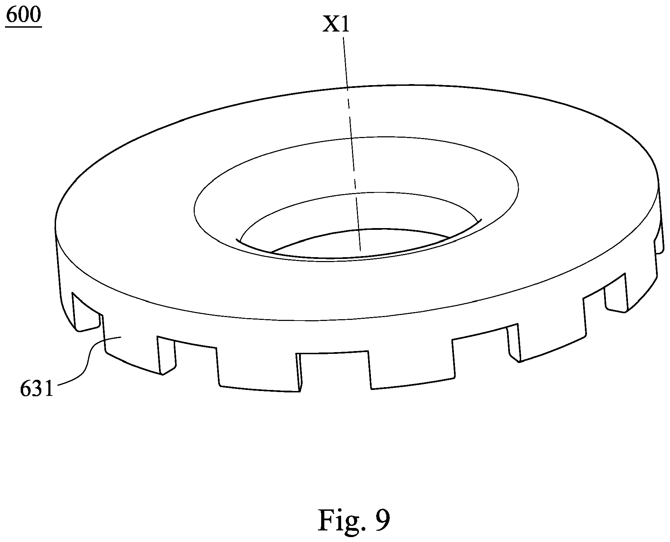

Fig. 7 shows a three-dimensional view of a gasket 400 according to a fourth embodiment of the present disclosure. In the fourth embodiment, structures and configuration of the gasket 400 are similar with the structures and configuration of the gasket 200 of the second embodiment, and will not be described herein. It is worthy to be mentioned that, in the fourth embodiment, the gasket 400 may include a plurality of lateral grooves 413. In detail, a shape of each of the lateral grooves 413 may be strip-like, and the lateral grooves 413 are arranged around an axial direction X1 at an outer edge of a body 410 at intervals and extend form the body 410 to a covering portion. Therefore, it is convenient for a user to grip the gasket 400 from the outer edge of the body 410 when replacing the gasket 400. Fig. 8 shows a three-dimensional view of a gasket 500 according to a fifth embodiment of the present disclosure. In the fifth embodiment, structures and configuration of the gasket 500 are similar with the structures and configuration of the gasket 200 of the second embodiment, and will not be described herein. It is worthy to be mentioned that, in the fifth embodiment, a body 510 of the gasket 500 may include a plurality of notches 515, and the notches 515 are located at a cutter surface 511 and arranged around an axial direction X1 at intervals. As shown in Fig. 8, in view from a top of the gasket 500, a shape of each of the notches 515 may present a circular sector essentially, and an arc of each circular sector lines up with an outer edge of the cutter surface 511. Fig. 9 shows a three-dimensional view of a gasket 600 according to a sixth embodiment of the present disclosure. In the sixth embodiment, structures and configuration of the gasket 600 are similar with the structures and configuration of the gasket 200 of the second embodiment, and will not be described herein. It is worthy to be mentioned that, in the sixth embodiment, a covering portion of the gasket 600 can include a plurality of covering elements 631 arranged around an axial direction X1 at intervals. The covering elements 631 are connected integrally to a body such that an outer edge of the gasket 600 presents a structure with undulating heights. In other words, a part of the covering portion can be removed such that the chisel holder can be exposed partially from the covering portion when the covering portion covers the chisel holder. A tolerance of installing the gasket 600 can be increased to avoid that the gasket 600 cannot be uninstall from the chisel holder.

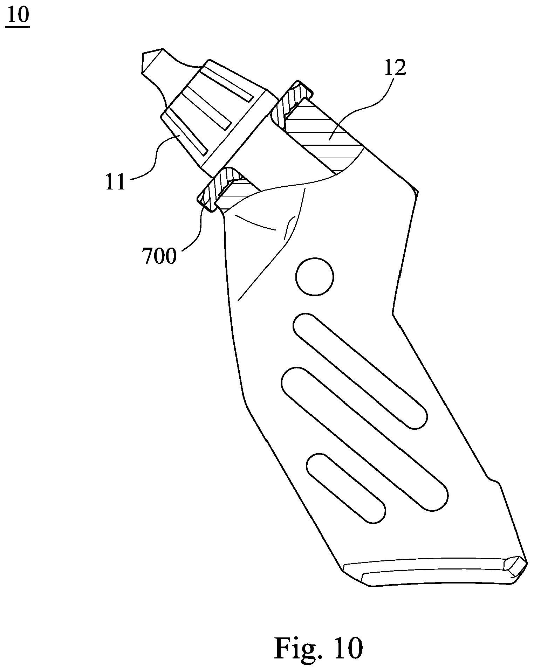

Fig. 10 shows a schematic view of a cutting tool structure 10 according to a seventh embodiment of the present disclosure. The cutting tool structure 10 includes a cutter 11, a chisel holder 12, and a gasket 700. The cutter 11 includes a head and a handle. The chisel holder 12 is configured for the cutter 11 to be installed thereat. The gasket 700 is disposed at the chisel holder 12 and configured for the cutter 11 to be installed and to rest thereon. Structures and configurations of the gasket 700 are similar with the structures and configurations of the gasket 200 of the second embodiment, but the present disclosure is not limited thereto. The handle of the cutter 11 is inserted in a through hole of the gasket 700 and installed on an opening of the chisel holder 12, and an extending portion of the gasket 700 abuts against the opening of the chisel holder 12. By a covering portion of the gasket 700 covering the chisel holder 12, the gasket 700 is positioned at the chisel holder 12 to improve the stability of installing the gasket 700 on the chisel holder 12 and to reduce the wearing between the gasket 700 and the chisel holder 12, thereby preventing abrasion of the chisel holder 12. During the milling process, a protruding ring of the gasket 700 contacts with and is worn by the chisel holder 12 such that the chisel holder 12 forms a corresponding convex surface. The gasket 700 can be further positioned at the chisel holder 12 by the protruding ring, and then the gasket 700 can be prevented from detaching from the chisel holder 12 during the milling process. As shown in Fig. 10, a gap is formed between the gasket 700 and the chisel holder 12 such that the gasket 700 is not sealed by the chisel holder 12 to maintain the mobility of the gasket 700.

In summary, the present disclosure has the following advantages. First, by the specific configuration of the covering portion, the groove and the protruding ring, the friction between the gasket and the chisel holder can be increased. Second, by integrally connecting the protruding ring to the covering portion, the stability of installing the gasket on the chisel holder can be improved. And, third, by the undulating surface formed by the different grooves with different depths on the holder surface, the impact on the holder surface can be dispersed.

## Claims

1. A gasket (100, 200, 300, 300, 400, 500, 600, 700) disposed at a chisel holder (12) and configured for a cutter (11) to rest thereon, the gasket (100, 200, 300, 300, 400, 500, 600, 700) comprising:
a body (110, 210, 410, 510) comprising:
a cutter surface (111, 511) facing towards the cutter (11); and
a holder surface (112, 212, 312) opposite to the cutter surface (111, 511);
a through hole (120, 220) penetrating the body (110, 210, 410, 510) and configured for a handle of the cutter (11) to insert therein, and the through hole (120, 220) having an axial direction (X1);
a covering portion (130, 230, 330) surrounding the body (110, 210, 410, 510) and
protruding outwards from the holder surface (112, 212, 312) along the axial direction (X1), and the covering portion (130, 230, 330) having a covering thickness (h1) relative to the holder surface (112, 212, 312);
at least one groove (141, 142, 241, 242, 340) disposed at the holder surface (112, 212, 312) and located between the covering portion (130, 230, 330) and the through hole (120, 220);
a protruding ring (150, 250, 350) protruding from the holder surface (112, 212, 312) and located between the covering portion (130, 230, 330) and the at least one groove (141, 142, 241, 242, 340); and
an extending portion (160, 260) located at the holder surface (112, 212, 312),
protruding from the holder surface (112, 212, 312), and surrounding the through hole (120, 220), wherein a radial thickness of the extending portion (160, 260) increases gradually towards the at least one groove (141, 142, 241, 242, 340) along the axial direction (X1).

2. The gasket (100, 200, 300, 300, 400, 500, 600, 700) of claim 1, wherein the at least one groove (141, 142, 241, 242, 340) has a depth (d1, d2) relative to the holder surface (112, 212, 312) along the axial direction (X1), and the depth (d1, d2) is greater than or equal to 0.2 mm and less than 0.3 mm.

3. The gasket (100, 200, 300, 300, 400, 500, 600, 700) of any of claims 1-2, wherein the extending portion (160, 260) has a maximum extending height (h2) relative to the at least one groove (141, 142, 241, 242, 340) along the axial direction (X1), and a ratio of an inner diameter (a1) of the through hole (120, 220) to the maximum extending height (h2) is greater than 8.

4. The gasket (100, 200, 300, 300, 400, 500, 600, 700) of any of claims 1-3, wherein a number of the at least one groove (141, 142, 241, 242, 340) is two, one of the two grooves (141, 142, 241, 242, 340) is located between the other one of the two grooves (141, 142, 241, 242, 340) and the through hole (120, 220), a ring protrusion (140) is formed between the two grooves (141, 142, 241, 242, 340), and the depth (d1, d2) of the one of the two grooves (141, 142, 241, 242, 340) is less than or equal to the depth (d1, d2) of the other one of the two grooves (141, 142, 241, 242, 340) along the axial direction (X1) relative to the holder surface (112, 212, 312).

5. The gasket (100, 200, 300, 300, 400, 500, 600, 700) of any of claims 1-4, wherein a spacing distance (d3) between the protruding ring (150, 250, 350) and the covering portion (130, 230, 330) is greater than or equal to 2 mm and less than 3 mm.

6. The gasket (100, 200, 300, 300, 400, 500, 600, 700) of any of claims 1-5, wherein the protruding ring (150, 250, 350) has a protruding height (h3) relative to the holder surface (112, 212, 312) along the axial direction (X1), and the protruding height (h3) is greater than or equal to 0.5 mm and less than 0.8 mm.

7. The gasket (100, 200, 300, 300, 400, 500, 600, 700) of any of claims 1-6, wherein the protruding ring (150, 250, 350) has a top surface (151), and the top surface (151) is perpendicular to the axial direction (X1).

8. The gasket (100, 200, 300, 300, 400, 500, 600, 700) of any of claims 1-7, wherein the body (110, 210, 410, 510) further comprises a plurality of radial convex portions (114) and a plurality of radial protruding portions (113), and each of the radial convex portions (114) and each of the radial protruding portions (113) are arranged alternatively to each other.

9. The gasket (100, 200, 300, 300, 400, 500, 600, 700) of any of claims 1-8, wherein the body (110, 210, 410, 510) further comprises a plurality of notches (115, 515), and the notches (115, 515) are located at the cutter surface (111, 511) and arranged around the axial direction (X1) at intervals.
